# NOUVEAU FASCICULE DE BREVET EUROPEEN

(11) **EP 0 884 433 B2**
(45) Date de publication et mention de la décision concernant l'opposition: **04.07.2007**
(45) Mention de la délivrance du brevet: 30.10.2002
(21) Numéro de dépôt: 98440115.8
(22) Date de dépôt: 29.05.1998
(51) Int. Cl.: E04F 11/18

(54) **Dispositif de jonction pour main courante**
Verbindungseinrichtung für einen Treppenhandlauf
Joining apparatus for handrail

(30) Priorité: 11.06.1997 FR 9707406
(43) Date de publication de la demande: 16.12.1998
(73) Titulaire: Au Creuset de la Thierache S.A., 02550 Origny en Thierache (FR)
(72) Inventeur: Ribe, Charles, 02500 Hirson (FR)
(74) Mandataire: Rhein, Alain

(56) Documents cités:
- EP-A- 0 688 920
- DE-A- 4 336 401
- DE-U- 9 406 130
- DE-U- 29 500 655
- FR-A- 2 491 167
- US-A- 4 637 589

## Description

L'invention concerne un dispositif de jonction pour main courante conforme au préambule de la revendication 1.

La présente invention concerne le domaine de la fabrication de mains courantes destinées à équiper, par exemple, un escalier ou encore être aptes à être associées à tout type de garde corps.

Un tel escalier se présente sous la forme d'une ou plusieurs volées longées par une main courante. En se saisissant de cette dernière, la personne qui emprunte ledit escalier est susceptible, soit de s'aider dans sa montée des marches, soit de prendre appui sur ladite main courante en vue d'assurer sa descente.

Une telle main courante se subdivise, généralement, en autant de portions que l'escalier comprend de volées. Ces portions se présentent usuellement, sous la forme d'éléments tubulaires qu'il s'agit de relier entre eux de manière à réaliser la continuité de ladite main courante.

On connaît déjà, au travers du document EP-0.688.920, un dispositif de jonction destiné à réaliser la continuité entre deux portions tubulaires d'une main courante.

Ce dispositif de jonction comporte deux embouts sous la forme de deux demi-sphères, rendus solidaires l'un de l'autre grâce à des moyens de liaison leur permettant d'adopter un mouvement de rotation l'un par rapport à l'autre en vue d'imposer un certain angle entre les deux portions de main courante.

Ces deux demi-sphères sont maintenues en contact au travers de leur surface plane de contact et sont équipées de moyens d'emboîtement intégrés ou rapportés permettant de les emmancher sur ou dans les extrémités desdites portions tubulaires constitutives de ladite main courante. Après ajustement de la position angulaire de ces moyens d'emboîtement, par exemple sous la forme d'une douille, ils sont fixés sur les extrémités desdites portions tubulaires de la main courante, notamment au moyen d'une vis traversant la paroi de ladite douille.

Un tel dispositif de jonction interposé entre deux portions de main courante présente certains inconvénients.

Ainsi, ce dispositif adopte, globalement; la forme d'une sphère dont le diamètre est sensiblement supérieur à celui desdites portions tubulaires de la main courante. Ceci se traduit par le fait que cette dernière présente, de loin en loin et au niveau justement desdites sphères, une proéminence qui, non seulement, gêne la progression de la main de l'utilisateur le long de cette main courante mais, en outre, nuit à l'esthétique générale de cette dernière.

On remarquera également que les moyens de liaison entre les deux demi-sphères autorisent une rotation libre de ces dernières l'une par rapport à l'autre. Si une telle rotation facilite le montage et la mise en place de la main courante, elle est aussi à l'origine d'un certain manque de rigidité et de stabilité de cette dernière.

De plus, la liaison entre le dispositif de jonction et les portions de main courante se fait au travers de moyens d'emboîtement, notamment une douille, lesquels peuvent présenter des parties saillantes susceptibles d'occasionner des blessures. Tel est également le cas lorsqu'il s'agit de fixer angulairement cette liaison en faisant appel à des pièces, notamment des vis, susceptibles de dépasser hors de leurs orifices de réception et pouvant présenter des angles vifs et/ou des portions tranchantes.

L'on connaît, également, au travers du document allemand DE-295 00 655, un dispositif de jonction pour main courante se présentant sous la forme de deux embouts, sensiblement cylindriques, destinés à être reliés, chacun, à une portion de main courante. Chaque embout présente un axe longitudinal et comporte, orienté à 45° par rapport à ce dernier, une surface de contact. Cette dernière est percée, perpendiculairement, d'un orifice destiné à recevoir un goujon apte à assurer la liaison entre les deux embouts du dispositif de jonction.

Chaque embout est percé, le long de l'axe longitudinal, d'un orifice traversant dans lequel est vissé un organe de fixation d'une portion de main courante. Cet orifice est également destiné à recevoir une vis de serrage apte à coopérer avec ledit goujon en vue d'immobiliser ce dernier en rotation par rapport à son embout.

En fait, cette vis de serrage est située à l'arrière dudit organe de fixation et est uniquement accessible avant la mise en place ou après retrait de ce dernier. Il en résulte que le positionnement ou le réglage angulaire d'un embout par rapport à l'autre peut se faire uniquement avant montage de la portion de main courante ou en procédant au retrait de celle-ci et ne peut être envisagé sans démonter à nouveau le dispositif de jonction.

Il convient, également, d'observer que la surface de contact de chaque embout est bordée, sur la moitié de son pourtour, par un rebord qui limite, sensiblement, la rotation et le positionnement angulaire, d'un embout par rapport à l'autre. Aussi, lorsqu'il s'agit de définir un angle entre deux portions de main courante, il convient, soit de recourir à une pièce intermédiaire interposée entre les deux embouts du noeud de connexion, soit de procéder au retournement de l'un au moins d'entre eux.

La présente invention aura pour but de remédier aux inconvénients précités au travers d'un dispositif de jonction de conception particulièrement simple et de mise en oeuvre aisée.

A cet effet, la présente invention concerne un dispositif de jonction pour main courante conforme à la revendication 1.

Les avantages découlant de la présente invention consistent en ce que la jonction entre deux portions de main courante d'escalier se fait au travers d'embouts cylindriques susceptibles d'adopter un mouvement de rotation l'un par rapport à l'autre. La section de ces embouts cylindriques peut être choisie de sorte qu'elle soit sensiblement identique à celle des portions, généralement tubulaires, de la main courante.

Ainsi la présente invention trouvera un intérêt tout particulier dans une application à une main courante constituée de profilés tubulaires de section sensiblement cylindrique. Cette main courante peut alors présenter une section invariable sur toute sa longueur permettant à l'utilisateur de progresser le long de celle-ci sans être gêné par une quelconque proéminence. On observera, en outre, que la disparition de cette dernière confère à la main courante une continuité contribuant avantageusement à son esthétique.

La conception particulièrement astucieuse de ces embouts autorise la suppression de tout angle vif, d'une part, entre lesdits embouts et, d'autre part, entre ces derniers et les portions de la main courante. Une telle conception permet, en outre, d'avoir recours à des moyens de liaison et de solidarisation des différentes pièces les unes par rapport aux autres, d'une part, de mise en oeuvre et d'accès facile et, d'autre part, dépourvus de parties saillantes, évitant ainsi tout risque de blessure.

De plus, les moyens de liaison entre deux embouts constituent également des moyens d'immobilisation en rotation de ces derniers l'un par rapport à l'autre. Grâce à de tels moyens de liaison, il est alors possible de conférer un angle déterminé à deux portions successives de main courante et de fixer angulairement ces dernières dans cette position par immobilisation de la rotation des embouts l'un par rapport à l'autre. Il en résulte un accroissement notable de la rigidité et de la stabilité de la main courante.

L'invention sera mieux comprise à la lecture de la description qui va suivre se rapportant au dessin joint en annexe et dans lequel :
- la figure 1 est une vue schématisée du dispositif de jonction constitué de deux embouts et reliant deux portions successives d'une main courante ;
- la figure 2 est une vue schématisée et en coupe d'un dispositif de jonction dont les embouts sont reliés, par l'intermédiaire de moyens d'emboîtement, à des portions de main courante constituées par un profilé de type tubulaire ;
- la figure 3 est une vue schématisée et en coupe transversale dudit profilé tubulaire ;
- la figure 4 est une vue schématisée et en coupe d'un embout comportant des moyens d'emboîtement correspondant à un second mode de réalisation ;
- la figure 5 est une vue similaire à la précédente et correspond à un autre mode de réalisation desdits moyens d'emboîtement.
- la figure 6 est une vue similaire à la précédente correspondant à un embout destiné à être rapporté sur une surface sensiblement plane, notamment un mur ;

La présente invention concerne un dispositif de jonction 1 pour main courante 2 laquelle est composée d'au moins deux portions successives 3, 3', longeant, chacune, par exemple, une volée d'escaliers.

Ainsi, une telle main courante 2 peut être constituée au moyen de profilés, notamment de type tubulaires. A ce propos, si, dans les modes de réalisation illustrés dans les figures du dessin ci-joint, le dispositif de jonction 1 intervient dans le cadre d'une main courante 2 de section circulaire et présente tout son intérêt dans une telle application, la présente invention n'y est, toutefois, pas limitée. En effet, ce dispositif de jonction 1 pourrait également assurer la liaison de deux portions de main courante de section différente, parallélépipédique par exemple.

Un tel dispositif de jonction 1 comprend au moins deux embouts 4, 4' destinés, chacun, à être rapportés à l'une des extrémités 5, respectivement 5' d'une portion 3, 3' de ladite main courante 2.

Ces embouts 4, 4' sont munis, chacun, d'une surface de contact 6 par l'intermédiaire de laquelle ils coopèrent l'un avec l'autre. Ils sont, en outre, rendus solidaires à l'aide de moyens de liaison 7 autorisant leur rotation autour d'un axe de rotation 8 à hauteur de leur surface de contact 6.

Selon l'invention, un embout 4, 4' est de forme cylindrique, tandis que sa surface de contact 6 s'étend dans un plan 9 orienté à 45° par rapport à l'axe longitudinal 10 de cet embout cylindrique 4, 4'. En outre, conformément à l'invention, ladite surface de contact 6 est définie de forme circulaire dont le centre 11 se situe sur l'axe de rotation 8.

Lors de l'assemblage des embouts 4, 4', la forme sensiblement circulaire de leur surface de contact 6 permet un recouvrement total de ces dernières au niveau de la jonction 12 de ces embouts 4, 4'. A ce propos, l'on observera que le diamètre D d'une surface de contact 6 peut être défini égal ou encore inférieur à la section S d'un embout 4, 4'.

Ainsi, comme il est plus particulièrement visible dans les différentes figures du dessin joint en annexe, un embout 4, 4' présente un contour externe 13 dont les abords 14 en direction de la surface de contact 6 sont de forme arrondie.

Une telle configuration permet, précisément, lors de l'assemblage de deux embouts 4, 4', d'éviter tout bord saillant ou angle vif au niveau de leur jonction 12. Il en résulte, d'une part, une protection de l'utilisateur contre d'éventuelles blessures et, d'autre part, une continuité particulièrement esthétique de la main courante 2.

Les deux embouts 4, 4' du dispositif de jonction 1 sont rendus solidaires, tel que déjà précisé ci-dessus, par l'intermédiaire de moyens de liaison 7.

A ce propos, ces derniers sont définis, selon l'invention, par une vis 15 constituant, substantiellement, l'axe de rotation 8 des deux embouts 4, 4' l'un par rapport à l'autre.

Plus précisément, au moins l'un des embouts 4 comporte un orifice traversant 16 s'étendant perpendiculairement au plan de la surface de contact 6, au centre 11 de cette dernière. En conséquence, l'axe de cet orifice 16 et l'axe de rotation 8 sont confondus.

Quant à l'autre embout 4', il comporte, lui aussi, un tel orifice 16' disposé de manière similaire mais qui, dans ce cas, peut être ou non traversant. Plus précisément, la tige filetée 17 de la vis 15 traversant, de part en part, l'orifice 16 de l'embout 4 peut, selon le cas, venir coopérer avec un taraudage 18 ménagé dans l'orifice 16', non débouchant, de l'embout 4'. Cette tige filetée 17 de la vis 15 peut, encore, déboucher de l'orifice traversant 16' dudit embout 4' de manière à coopérer avec un écrou (solution non représentée).

Il convient de préciser, d'ores et déjà, que le taraudage 18 dont il est question ci-dessus peut, effectivement, être usiné, directement, dans l'orifice non débouchant 16', mais l'on peut encore imaginer implanter dans ce dernier un écrou sous forme d'un insert comportant, lui, le trou taraudé pour la réception de la vis 15.

Préférentiellement, l'orifice traversant 16 et, selon le cas, 16' comporte à son extrémité 19 débouchant à hauteur du contour externe 13 d'un embout 4, 4', un lamage 20 pour la réception, selon le cas, de la tête 21 de vis 15 ou d'un écrou (solution correspondant au cas où l'orifice 16' de l'embout 4' est, lui aussi, débouchant).

Avantageusement, ce dispositif de jonction 1 comporte, en outre, des moyens de centrage 22 des embouts 4, 4' à hauteur de leur surface de contact 6. Selon un mode de réalisation préférentiel, ces moyens de centrage 22 sont définis, d'une part, au niveau d'un embout 4 par un fraisage circulaire 23 coaxial à l'orifice 16 au niveau de ladite surface de contact 6 et, d'autre part, par un tenon de centrage de forme conjuguée, disposé, en concordance, au niveau de la surface de contact 6 de l'autre embout 4'.

Selon un autre mode de réalisation préférentiel, chacun de ces embouts 4, 4' peut présenter, au niveau de sa surface de contact 6, un fraisage circulaire 23 analogue pour la réception d'une bague de centrage.

Tel que cela ressort de la description qui précède, les moyens de liaison 7 reliant deux embouts 4, 4', constituent en outre, des moyens d'immobilisation en rotation de ces derniers. Ainsi, une fois la position angulaire ajustée de ces embouts 4, 4', par rapport aux portions 3, 3', de la main courante 2, l'opérateur peut assurer le serrage de la vis 15 permettant de conférer à l'ensemble une parfaite rigidité et, par conséquent, une meilleure tenue mécanique de la main courante 2.

Ces embouts 4, 4' du dispositif de jonction 1 comportent, également, des moyens 24 permettant de les rendre solidaires de l'extrémité 5, 5' d'une portion 3, 3', de la main courante 2.

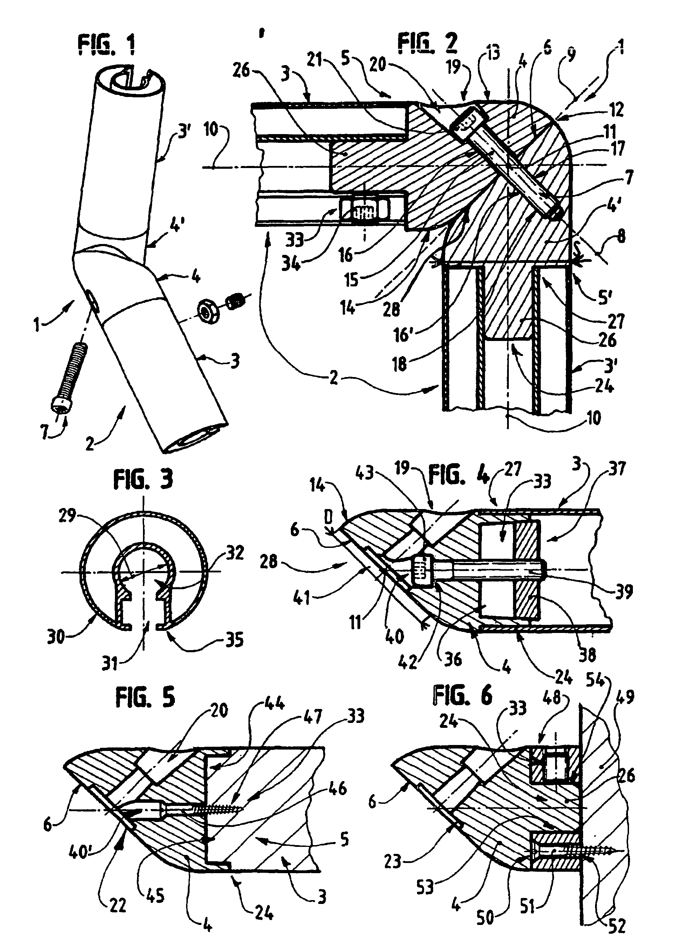

Tel que représenté dans les figures 2 et 4 à 6, de tels moyens 24 empruntent, préférentiellement, la forme de moyens d'emboîtement.

Selon un premier mode de réalisation représenté figure 2, lesdits moyens 24 sont constitués par un tenon 26 équipant l'extrémité opposée 27 à celle 28 munie de la surface de contact 6 d'un embout 4, 4'. La section de ce tenon 26 est, dans ce cas, préférentiellement ajustée à la section interne 29 d'un profilé de forme tubulaire définissant une portion 3, 3' de la main courante 2. Toutefois, en vue de permettre la libre rotation d'un tel embout 4, 4' par rapport à une portion 3, 3' de la main courante 2, ce tenon 26 est de forme cylindrique et disposé dans le prolongement axial à l'extrémité 27 d'un embout 4, 4'.

Il a été représenté figure 3, une vue en coupe d'un profilé 30 de main courante 2 de section sensiblement circulaire. Au niveau de ce profilé 30, il est défini une rainure longitudinale 31 en forme de trou de serrure comportant, intérieurement, une partie semi-cylindrique 32 disposée coaxialement audit profilé 30. C'est dans cette partie semi-cylindrique 32 que vient, préférentiellement, se loger le tenon 26.

A noter que de tels moyens de solidarisation 24 peuvent, encore, être complétés par des moyens de fixation 33 destinés à figer la liaison entre un embout 4, 4' et une portion 3, 3' de la main courante 2. Ainsi, dans le mode de réalisation qui vient d'être décrit précédemment, de tels moyens de fixation 33 peuvent se présenter, avantageusement, sous forme d'un système vis-écrou 34 prenant position dans la rainure 31, entre la partie semi-cylindrique 32 de cette dernière et le contour externe 35 du profilé 30.

Selon un autre mode de réalisation, le tenon 26 peut être prévu de forme tronconique pour autoriser un emmanchement en force dans le profilé tubulaire définissant une portion 3, 3', de main courante 2, un tel tenon 26 constituant, alors, en soi, lesdits moyens de fixation 33.

Figure 4, il a été représenté un autre mode de réalisation dans lequel lesdits moyens de solidarisation 24, sous forme de moyens d'emboîtement, sont définis, à l'extrémité 27 de l'embout 4, 4', sous la forme d'une douille 36. Cette dernière est ajustée à la section interne 29 du profilé définissant une portion 3, 3' d'une main courante 2 et les moyens 24 ainsi configurés sont, là encore, complétés par des moyens de fixation 33. Substantiellement, ceux-ci sont définis, d'une part, par une douille 36 fendue axialement et, d'autre part, par des moyens d'expansion radiale 37 de ladite douille 36. Lesdits moyens d'expansion radiale 37 se présentent, selon un mode de réalisation préférentiel, sous forme d'un coin 38 à même d'être repoussé à l'intérieur de la douille 36 et d'exercer une pression radiale sur cette dernière, ceci sous l'action d'une vis 39 traversant un orifice 40 ménagé axialement dans l'embout 4, 4'. Là encore, cet orifice 40 comporte, à son extrémité débouchante 41 au niveau de la surface de contact 6, un lamage 42 pour la réception de la tête de vis 43.

Selon un autre mode de réalisation des moyens 24 destinés à rendre solidaire un embout 4, 4' de l'extrémité 5, 5' d'une portion 3, 3' de main courante 2, ledit embout 4, 4' comporte, à son extrémité 27, un évidement circulaire 44 pour la réception d'un tenon 45 de forme ajustée équipant, précisément, l'extrémité 5, 5' de ladite portion 3, 3' de la main courante 2. Là encore, lesdits moyens de fixation 33 peuvent se présenter sous la forme d'un ajustement serré entre l'évidement 44 et le tenon 45. Cependant et tel que représenté figure 5, ces moyens de fixation 33 peuvent encore être constitués par une vis de fixation 46 traversant un orifice axial 40' ménagé dans l'embout 4, 4', vis 46 dont la partie filetée 47 vient coopérer avec ladite extrémité 5, 5' d'une portion 3, 3', de main courante 2.

Dans le cadre de moyens de solidarisation 24 sous forme d'un tenon 26, on observera que les moyens de fixation 33 peuvent encore emprunter la configuration simplifiée d'une vis de serrage quelconque à même de coopérer, simultanément, avec le tenon 26 et le profilé définissant une portion 3, 3' de main courante 2.

Avantageusement et tel que représenté figure 6, le dispositif de jonction 1, selon l'invention, peut être complété par un socle de fixation 48 permettant de rapporter l'un des embouts 4, 4' sur une surface sensiblement plane 49, par exemple un mur.

Selon un mode de réalisation préférentiel, ce socle de fixation 48 comporte, d'une part, des moyens 50 permettant de le fixer contre ladite surface plane 49. En fait, de tels moyens de fixation 50 peuvent se présenter sous forme d'une ou plusieurs vis de fixation 51 traversant des ouvertures 52 ménagées, précisément, dans ce socle de fixation 48. D'autre part, ce dernier est muni de moyens d'emboîtement complémentaires 53 aux moyens d'emboîtement définis par les moyens de solidarisation 24 qui équipent l'un de ces embouts 4, 4', à son extrémité 27 et avec lesquels ils coopèrent. A titre d'exemple, dans le cadre de moyens de solidarisation 24 sous forme d'un tenon 26, le socle de fixation 48 comporte un logement 54 pour la réception de ce tenon 26. Là encore, l'on peut prévoir des moyens de fixation 33 sous forme d'une vis ou analogue à même de rendre solidaire l'embout 4, 4' dudit socle de fixation 48.

Selon un mode de réalisation préférentiel, ce dernier présente, en outre et avantageusement, une section circulaire ajustée à la forme cylindrique d'un tel embout 4, 4'.

Tel qu'il ressort de la description qui précède, le dispositif de jonction 1 est susceptible d'immobiliser des portions 3, 3' de la main courante 2 avec un angle entre elles compris entre 0 et 90°. Cependant, l'on peut encore imaginer, en fixant bout à bout deux dispositifs de jonction 1, permettre une orientation comprise entre 0 et 180° de deux portions 3, 3' successives de la main courante 2. A ce propos et si l'on peut imaginer de fixer, bout à bout, deux dispositifs de jonction 1 à l'aide d'un tronçon réduit de la main courante 2, on peut encore envisager selon un mode de réalisation avantageux de la présente invention, d'équiper un embout 4 d'un tel dispositif de jonction 1 de moyens de solidarisation 24 du type mâle tandis que l'autre embout 4' est pourvu, lui, de moyens de solidarisation 24 de forme conjuguée, sous forme de moyens d'emboîtement de type femelle, permettant, ainsi, d'emboîter, bout à bout, plusieurs dispositifs de jonction 1, conformes à l'invention.

En conséquence, on s'aperçoit qu'au travers d'une conception finalement très simple, le dispositif de jonction 1, conforme à l'invention répond, de manière avantageuse, au problème posé dans la partie introductive de cette description. Ainsi, un tel dispositif de jonction 1 est en mesure, non seulement, d'assurer une certaine continuité, sans proéminence, au niveau de la main courante, mais également de contribuer à la rigidité de cette dernière.

## Revendications

1. Dispositif de jonction pour main courante (2) comprenant au moins deux embouts (4, 4'), chacun étant destiné à être rapporté à l'extrémité d'une portion (3, 3') de la main courante (2), ces embouts (4, 4') étant en contact direct l'un avec l'autre par l'intermédiaire de surfaces de contact (6) que comportent chacun de ces embouts (4, 4') et qui s'étendent dans un plan (9) orienté à 45° par rapport à l'axe longitudinal (10) de ces embouts (4, 4'), ces derniers étant rendus solidaires à l'aide de moyens de liaison (7), d'une part, à même d'autoriser leur rotation à hauteur des surfaces de contact (6) qui sont définies de forme sensiblement circulaire dont le centre (11) se situe sur l'axe (8) de la rotation qu'autorise les moyens de liaison (7), d'autre part, définis par une vis (15) constituant, substantiellement, l'axe de rotation (8) des deux embouts (4, 4'), de tels moyens de liaison (7) constituant, en outre, des moyens d'immobilisation en rotation de ces embouts (4, 4') conçus aptes à être accessibles au travers d'un orifice (16, 16') débouchant à hauteur du contour externe (13) de l'un de ces embouts (4, 4'), **caractérisé par le fait que** chaque embout (4, 4') du dispositif de jonction (1) est de forme cylindrique et que chaque embout cylindrique (4, 4') présente, sur l'intégralité de son pourtour et en direction de la surface de contact (6), un contour externe (13) dont les abords (14) en direction de cette surface de contact (6) sont de forme arrondie pour permettre, d'une part, une rotation libre de la surface de contact (6) d'un embout (4) du dispositif de jonction (1) par rapport à la surface de contact (6) de l'autre embout (4') de ce dispositif de jonction (1) et, d'autre part, d'éviter tout bord saillant ou angle vif au niveau de la jonction de ces embouts (4, 4').

2. Dispositif de jonction (1) selon la revendication 1, **caractérisé par le fait qu'**au moins l'un des embouts (4) comporte un orifice traversant (16) s'étendant perpendiculairement au plan de la surface de contact (6), au centre (11) de cette dernière, et autorisant le passage de la vis (15), tandis que l'autre embout (4') comporte un orifice (16') disposé de manière similaire, traversant ou non, pour, selon le cas, autoriser le passage de la tige filetée (17) de la vis (15) ou lui permettre de coopérer avec un taraudage (18) ménagé dans cet orifice (16').

3. Dispositif de jonction (1) selon la revendication 2, **caractérisé par le fait que** l'orifice traversant (16) et, selon le cas, (16') comporte, à son extrémité (19) débouchant à hauteur du contour externe (13) d'un embout (4, 4'), un lamage (20) pour la réception, selon le cas, de la tête (21) de vis (15) ou d'un écrou.

4. Dispositif de jonction (1) selon l'une quelconque des revendications précédentes, **caractérisé par le fait qu'**il comporte des moyens de centrage (22) des embouts (4, 4') à hauteur de leur surface de contact (6).

5. Dispositif de jonction (1) selon l'une quelconque des revendications précédentes, **caractérisé par le fait qu'**un embout (4, 4') comporte, en outre, des moyens (24) permettant de les rendre solidaires de l'extrémité (5, 5') d'une portion (3, 3') de la main courante (2), de tels moyens (24) se présentant sous la forme de moyens d'emboîtement et étant complétés par des moyens de fixation (33).

6. Dispositif de jonction (1) selon la revendication 5, **caractérisé par le fait que** les moyens (24) sont constitués par un tenon (26) équipant l'extrémité opposée (27) à celle (28) munie de la surface de contact (6) d'un embout (4, 4'), ce tenon (26) étant préférentiellement de forme cylindrique et disposé dans le prolongement axial à l'extrémité (27) de l'embout (4, 4'), la section de ce tenon (26) étant ajustée à la section interne (29) d'un profilé de forme tubulaire définissant une portion (3, 3') de la main courante (2).

7. Dispositif de jonction (1) selon la revendication 5, **caractérisé par le fait que** lesdits moyens (24), sous forme de moyens d'emboîtement, sont définis, à l'extrémité (27) opposée à celle (28) munie de la surface de contact (6) d'un embout (4, 4'), sous la forme d'une douille (36) ajustée à la section interne (29) du profilé définissant une portion (3, 3') d'une main courante (2), lesdits moyens de fixation (33) consistant, d'une part, en ce que la douille (36) est fendue axialement et, d'autre part, en des moyens d'expansion radiale (37) de cette douille (36).

8. Dispositif de jonction (1) selon la revendication 5, **caractérisé par le fait que** lesdits moyens (24) destinés à rendre solidaire un embout (4, 4') de l'extrémité (5, 5') d'une portion (3, 3') de main courante (2) sont définis, à l'extrémité (27) opposée à celle (28) munie de la surface de contact (6) d'un tel embout (4, 4'), par un évidement circulaire (44) pour la réception d'un tenon (45) de forme ajustée équipant l'extrémité (5, 5') de ladite portion (3, 3') de la main courante (2).

9. Dispositif de jonction (1) selon la revendication 8, **caractérisé par le fait que** les moyens de fixation (33) se présentent sous la forme d'une vis de fixation (46) traversant un orifice axial (40') ménagé dans l'embout (4, 4'), vis (46) dont la partie filetée (47) vient coopérer avec l'extrémité (5, 5') d'une portion (3, 3') de la main courante (2).

10. Dispositif de jonction (1) selon l'une quelconque des revendications précédentes, **caractérisé par le fait qu'**il est complété par un socle de fixation (48) comportant des moyens de fixation (50) sur une paroi plane (49) telle qu'un mur, ce socle de fixation (48) comportant des moyens d'emboîtement complémentaires (53) aux moyens d'emboîtement définis par les moyens de solidarisation (24) lesquels équipent l'un de ces embouts (4, 4') à son extrémité (27) et permettent de rendre solidaire ledit embout (4, 4') de l'extrémité (5, 5') d'une portion (3, 3') de la main courante (2), lesdits moyens d'emboîtement complémentaires (53) coopérant avec les moyens de solidarisation (24).

11. Dispositif de jonction (1) selon la revendication 5, **caractérisé par le fait que** les moyens (24) permettant de rendre solidaire un embout (4) de l'extrémité (5, 5') d'une portion (3, 3') de la main courante (2) se présentent sous forme de moyens d'emboîtement de type mâle tandis que les moyens (24) correspondant à l'autre embout (4') du dispositif de jonction (1) sont constitués par des moyens d'emboîtement de type femelle autorisant un emboîtement, bout à bout, de deux ou davantage de dispositifs de jonction (1).

## Claims

1. Joining device for handrail (2), including at least two end fittings (4, 4'), each one of which being aimed at being inserted against the end of a portion (3, 3') of the handrail (2), these end fittings (4, 4') being directly in contact with each other through contact surfaces (6) each of these end fittings (4, 4') includes and which extend in a plane (9) oriented at 45° with respect to the longitudinal axis (10) of these end fittings (4, 4'), the latter being made integral through connecting means (7), on the one hand, capable of authorising their rotation at the level of the contact surfaces (6) that are defined of a substantially circular shape the centre (11) of which is located on the axis (8) of the rotation authorised by the connecting means (7), on the other hand, defined by a screw (15) substantially forming the axis of rotation (8) of both end fittings (4, 4'), such connecting means (7) forming, in addition, means for immobilising these end fittings (4, 4') in rotation and designed so as to be capable of being acceded through an opening (16, 16') ending at the level of the outer contour (13) of one of these end fittings (4, 4'), **characterised in that** each end fitting (4, 4') of the joining device (1) has a cylindrical shape and **in that** each end fitting (4, 4') has, on its full periphery and in the direction of the contact surface (6), an outer contour (13) the surroundings (14) of which in the direction of the contact surface (6) are of a rounded shape, in order to allow, on the one hand, free rotation of the contact surface (6) of an end fitting (4) of the joining device (1) with respect to the contact surface (6) of the other end fitting (4') of this joining device (1) and, on the other hand, avoid any protruding edge or sharp angle at the level of the joining of these end fittings (4, 4').

2. Joining device (1) according to claim 1, **characterised in that** at least one of the end fittings (4) includes a through-hole (16) extending perpendicularly to the plane of the contact surface (6), at the centre (11) of the latter, and authorising the passing through of the screw (15), while the other end fitting (4') includes an opening (16') arranged in a similar way, it being a through-hole or not, in order to, as the case may be, either authorise the passing through of the threaded stem (17) of the screw (15) or to allow same to co-operate with an inner thread (18) provided for in this opening (16').

3. Joining device (1) according to claim 2, **characterised in that** the through-hole (16), and, as the case may be, (16'), includes, at its end (19) ending at the level of the outer contour (13) of an end fitting (4, 4'), a counter-bore (20) for receiving, as the case may be, the head (21) of the screw (15) or a nut.

4. Joining device (1) according to any of the preceding claims, **characterised in that** it includes means for centring (22) the end fittings (4, 4') at the level of their contact surface (6).

5. Joining device (1) according to any of the preceding claims, **characterised in that** an end fitting (4, 4') includes, in addition, means (24) allowing making it integral with the end (5, 5') of a portion (3, 3') of the handrail (2), such means (24) being in the form of encasing means and being completed with fastening means (33).

6. Joining device (1) according to claim 5, **characterised in that** the means (24) are formed by a pin (26) which the end (27) opposite the one (28) provided with the contact surface (6) of an end fitting (4, 4') is provided with, this pin (26) preferably being of a cylindrical shape and arranged in the axial extension at the end (27) of the end fitting (4, 4'), the cross-section of this pin (26) being adapted to the internal cross-section (29) of a profile with a tubular shape defining a portion (3, 3') of the handrail (2).

7. Joining device (1) according to claim 5, **characterised in that** said means (24), in the form of encasing means, are defined, at the end (27) opposite the one (28) provided with the contact surface (6) of an end fitting (4, 4'), in the form of a bushing (36) adapted to the internal cross-section (29) of the profile defining a portion (3, 3') of a handrail (2), said fastening means (33) consisting, on the one hand, **in that** the bushing (36) is axially split and, on the other hand, of means (37) for radially expanding this bushing (36).

8. Joining device (1) according to claim 5, **characterised in that** said means (24) for making an end fitting (4, 4') integral with the end (5, 5') of a portion (3, 3') of the handrail (2) are defined, at the end (27) opposite the one (28) provided with the contact surface (6) of such an end fitting (4, 4'), by a circular recess (44) for receiving a pin (45) of an adapted shape the end (5, 5') of said portion (3, 3') of the handrail (2) is provided with.

9. Joining device (1) according to claim 8, **characterised in that** the fastening means (33) are in the form of a fastening screw (46) passing through an axial opening (40') provided for in the end fitting (4, 4'), the threaded portion (47) of the screw (46) co-operating with the end (5, 5') of a portion (3, 3') of the handrail (2).

10. Joining device (1) according to any of the preceding claims, **characterised in that** it is completed with a fastening base (48) including means (50) for fastening to a flat wall, such as a masonry wall, this fastening base (48) including encasing means (53) complementary to the encasing means defined by the means for making integral (24), which one of these end fittings (4, 4') is provided with at its end (27) and which allow making said end fitting (4, 4') integral with the end (5, 5') of a portion (3, 3') of the handrail (2), said complementary encasing means (53) co-operating with the means for making integral (24).

11. Joining device (1) according to claim 5, **characterised in that** the means (24) allowing making an end fitting (4) integral with the end (5, 5') of a portion (3, 3') of the handrail (2) are in the form of encasing means of the male type, while the means (24) corresponding to the other end fitting (4') of the joining device (1) are formed by encasing means of the female type authorising an end-to-end encasing of two or more joining devices (1).

## Patentansprüche

1. Verbindungseinrichtung für Treppenhandlauf (2), umfassend wenigstens zwei Endstücke (4, 4'), jeweils dazu bestimmt, an das Ende eines Teils (3, 3') des Treppenhandlaufs (2) angebracht zu werden, wobei diese Endstücke (4, 4') über Berührungsflächen (6) direkt miteinander in Berührung stehen, die jedes dieser Endstücke (4, 4') umfasst und die sich in eine Ebene (9) erstrecken, die in 45° hinsichtlich der Längsachse (10) dieser Endstücke (4, 4') gerichtet ist, wobei diese letzteren mit Hilfe von Verbindungsmitteln (7) fest miteinander verbunden sind, die, einerseits, imstande sind, ihre Drehung im Bereich der Berührungsflächen (6) zu erlauben, die mit einer im wesentlichen kreisförmiger Form definiert sind, deren Mittelpunkt (11) sich auf der Achse (8) der Drehung befindet, die von den Verbindungsmitteln (7) erlaubt wird, andererseits, durch eine Schraube (15) definiert sind, die im wesentlichen die Drehachse (8) der beiden Endstücke (4, 4') bildet, wobei solche Verbindungsmittel (7) außerdem Mittel zum Sperren der Drehung dieser Endstücke (4, 4') darstellen, geeignet vorgesehen, durch eine Öffnung (16, 16'), die im Bereich des äußeren Umkreises (13) eines dieser Endstücken (4, 4') ausmündet, zugänglich zu sein, **dadurch gekennzeichnet, dass** jedes Endstück (4, 4') der Verbindungseinrichtung (1) zylindrischer Form ist und dass jedes Endstück (4, 4') auf seiner ganzen Peripherie und in Richtung auf die Berührungsfläche (6) eine äußere Kontur (13) aufweist, dessen Umgebung (14) in Richtung auf die Berührungsfläche (6) mit abgerundeter Form ist, um, einerseits, eine freie Drehung der Berührungsfläche (6) eines Endstückes (4) der Verbindungseinrichtung (1) bezüglich der Berührungsfläche (6) des anderen Endstückes (4') dieser Verbindungseinrichtung (1) zu erlauben und, andererseits, jeglichen vorspringenden Rand oder scharfen Winkel im Bereich der Verbindung dieser Endstücke (4, 4') zu vermeiden.

2. Verbindungseinrichtung (1) nach Anspruch 1, **dadurch gekennzeichnet, daß** wenigstens eines der Endstücke (4) eine Durchgangsöffnung (16) umfaßt, die sich senkrecht zur Ebene der Berührungsfläche (6), im Mittelpunkt (11) dieser letzteren erstreckt und den Durchgang der Schraube (15) erlaubt, während das andere Endstück (4') eine Öffnung (16') umfaßt, die auf ähnliche Art und Weise, durchgehend oder nicht, angeordnet ist, um je nach dem Fall den Durchgang der Gewindestange (17) der Schraube (15) zu erlauben oder ihr zu ermöglichen, mit einem in dieser Öffnung (16') vorgesehenen Innengewinde (18) zusammenzuwirken.

3. Verbindungseimichtung (1) nach Anspruch 2, **dadurch gekennzeichnet, daß** die Durchgangsöffnung (16) und, je nach dem Fall (16'), an ihrem im Bereich des äußeren Umkreises (13) eines Endstückes (4, 4') ausmündenden Ende (19) eine Senkung (20) umfaßt zum Aufnehmen, je nach dem Fall, des Kopfes (21) der Schraube (15) oder einer Schraubenmutter.

4. Verbindungseinrichtung (1) nach irgendeinem der vorangehenden Ansprüche, **dadurch gekennzeichnet, daß** sie Mittel zum Zentrieren (22) der Endstücke (4, 4') im Bereich ihrer Berührungsfläche (6) umfaßt.

5. Verbindungseinrichtung (1) nach irgendeinem der vorangehenden Ansprüche, **dadurch gekennzeichnet, daß** ein Endstück (4, 4') außerdem Mittel (24) umfaßt, erlaubend, daß es fest mit dem Ende (5, 5') eines Teils (3, 3') des Treppenhandlaufs (2) verbunden wird, wobei solche Mittel (24) als Mittel zum Einfügen ausgestaltet sind und mit Befestigungsmitteln (33) ergänzt sind.

6. Verbindungseinrichtung (1) nach Anspruch 5, **dadurch gekennzeichnet, daß** die Mittel (24) von einem Zapfen (26) gebildet sind, mit welchem das Ende (27) versehen ist, demjenigen (28) gegenüberliegend, welches mit der Berührungsfläche (6) eines Endstücks (4, 4') versehen ist, wobei dieser Zapfen (26) vorzugsweise mit zylindrischer Form sei und in der axialen Verlängerung des Endes (27) des Endstücks (4, 4') angeordnet ist, wobei der Querschnitt dieses Zapfens (26) an den inneren Querschnitt (29) eines röhrenförmigen Profils angepaßt ist, welches einen Teil (3, 3') des Treppenhandlaufs (2) definiert.

7. Verbindungseinrichtung (1) nach Anspruch 6, **dadurch gekennzeichnet, daß** die besagten, als Mittel zum Einfügen ausgestalteten Mittel (24) am Ende (27), demjenigen (28) gegenüberliegend, welches mit der Berührungsfläche (6) eines Endstücks (4, 4') versehen ist, als eine Hülse (36) definiert sind, die an den inneren Querschnitt (29) des Profils angepaßt ist, welches einen Teil (3, 3') des Treppenhandlaufs (2) definiert, wobei die besagten Befestigungsmittel (33) bestehen, einerseits, darin, daß die Hülse (36) axial gespaltet ist und, andererseits, aus Mitteln zur radialen Ausdehnung (37) dieser Hülse (36).

8. Verbindungseinrichtung (1) nach Anspruch 6, **dadurch gekennzeichnet, daß** die besagten Mittel (24), die dazu bestimmt sind, ein Endstück (4, 4') fest mit dem. Ende (5, 5') eines Teils (3, 3') des Treppenhandlaufs (2) zu verbinden, an dem Ende (27), demjenigen (28) gegenüberliegend, welches mit der Berührungsfläche (6) eines solchen Endstücks (4, 4') versehen ist, durch eine kreisförmige Ausnehmung (44) zum Aufnehmen eines Zapfens (45) mit angepaßter Form, mit welchem das Ende (5, 5') des besagten Teils (3, 3') des Handlaufs (2) versehen ist, definiert werden.

9. Verbindungseinrichtung (1) nach Anspruch 8, **dadurch gekennzeichnet, daß** die Befestigungsmittel (33) als eine Befestigungsschraube (46) ausgestaltet sind, die eine im Endstück (4, 4') vorgesehene, axiale Öffnung (40') durchquert, wobei der Gewindeteil (47) der Schraube (46) mit dem Ende (5, 5') eines Teils (3, 3') des Treppenhandlaufs (2) zusammenwirkt.

10. Verbindungseinrichtung (1) nach irgendeinem der vorangehenden Ansprüche, **dadurch gekennzeichnet, daß** sie durch einen Befestigungssockel (48) ergänzt ist, der die Mittel zur Befestigung (50) an eine flache Wand (49), wie eine Mauer, umfaßt, wobei dieser Befestigungssockel (48) Mittel zum Einfügen (53) umfaßt, die den Mitteln zum Einfügen ergänzen und durch die Mittel zur festen Verbindung (24) definiert sind, mit welchen eines dieser Endstücke (4, 4') an seinem Ende (27) versehen ist und es erlauben, das besagte Endstück (4, 4') fest mit dem Ende (5, 5') eines Teils (3, 3') des Treppenhandlaufs (2) zu verbinden, wobei die besagten ergänzenden Mittel zum Einfügen (53) mit den Mitteln zur festen Verbindung (24) zusammenwirken.

11. Verbindungseinrichtung (1) nach Anspruch 5, **dadurch gekennzeichnet, daß** die Mittel (24), erlaubend ein Endstück (4) mit dem Ende (5, 5') eines Teils (3, 3') des Treppenhandlaufs (2) zu verbinden, als männliche Mittel zum Einfügen ausgestaltet sind, während die Mittel (24), die dem anderen Endstück (4') der Verbindungseinrichtung (1) entsprechen, von weiblichen Mitteln zum Einfügen gebildet sind, die eine Einfügung aneinander von zwei oder mehreren Verbindungseinrichtungen (1) erlauben.
